# EUROPÄISCHE PATENTSCHRIFT

(11) **EP 2 014 495 B1**
(45) Veröffentlichungstag und Bekanntmachung des Hinweises auf die Patenterteilung: **16.03.2011**
(21) Anmeldenummer: 08010498.7
(22) Anmeldetag: 10.06.2008
(51) Int. Cl.: B60J 7/00

(54) **Vorrichtung zur Verbindung eines Schiebehimmels eines Fahrzeudachs mit einem Gleitelement**
Device for connecting a sliding roof on a vehicle with a sliding element
Dispositif de liaison d'un store coulissant d'un toit de véhicule à l'aide d'un élément coulissant

(30) Priorität: 09.07.2007 DE 202007009582 U
(43) Veröffentlichungstag der Anmeldung: 14.01.2009
(73) Patentinhaber: Webasto AG, 82131 Stockdorf (DE)
(72) Erfinder: Deistler, Stefan, 80993 München (DE); Rockelmann, Andreas, 81249 München (DE)

(56) Entgegenhaltungen:
- EP-A- 1 167 098
- EP-A- 1 195 281
- DE-A1- 3 534 375
- DE-A1- 19 624 734
- DE-C1- 4 135 955

## Beschreibung

Die Erfindung betrifft eine Vorrichtung zur Verbindung eines Schiebehimmels eines Fahrzeugdachs mit einem Gleitelement gemäß dem Oberbegriff des Anspruchs 1.

Aus der Druckschrift EP 1 195 281 A1 ist ein derartiges Fahrzeugdach bekannt. Dieses Fahrzeugdach umfasst unterhalb eines Schiebedachdeckelelements einen Schiebehimmel, der von einer Trägerplatte gebildet ist. In die Trägerplatte sind Einlegeteile eingebettet, die jeweils ein Gewinde aufweisen, über das ein Gleiterträger für Gleitelemente des Schiebehimmels befestigt ist. Die Trägerplatte stellt ein Formbauteil dar.

Aus der DE 41 35 955 C1 ist ein Fahrzeugdach mit einem Schiebehimmel bekannt, der aus einer Grundplatte aus Aluminium und einer auf deren Oberseite aufgebrachten Schaumschicht besteht. Die Schaumschicht weist dort in den Eckbereichen Aussparungen auf. Im Bereich dieser Aussparungen sind an der Grundplatte zapfenförmig nach oben vorspringende Ansätze angeformt. Auf diese werden an Befestigungsteilen befindliche Löcher aufgesetzt und das Aluminiummaterial der Ansätze anschließend oberhalb der Löcher verstemmt. Die Befestigungsteile bilden im mittleren Bereich eine in Querrichtung (Y-Richtung) offene Lasche, die zur verschiebbaren Führung eines Gleiterträgers dient. Die Führung kann unter ungünstigen Umständen zu einer leichten Verdrehung des Gleiterträgers und somit zum Verkanten eines am äußeren Ende des Gleiterträgers angeordneten Gleitschuhs in dessen Führungsschiene führen.

Der Erfindung liegt die Aufgabe zugrunde, eine Vorrichtung zur Verbindung eines Schiebehimmels eines Fahrzeugdachs mit einem Gleitelement zu schaffen, mittels der die Positionierung und verdrehsichere Verbindung eines Gleiterträgers wesentlich erleichtert wird.

Diese Aufgabe wird erfingdungsgemäß durch die Merkmale des Anspruchs 1 und alternativ durch die Merkmale des Anspruchs 2 gelöst. Vorteilhafte Ausgestaltungen der Erfindung sind in den Unteransprüchen angegeben.

Die Erfindung sieht im Kern vor, dass die Trägerplatte aus einem geschäumten Kunststoffmaterial besteht und dass als Befestigungselement ein Einlegeteil in das Kunststoffmaterial der Trägerplatte eingebettet ist, das Formschlusselemente zur Aufnahme komplementär geformter Formschlusselemente am Gleiterträger aufweist.

Gemäß einer ersten Ausführungsform ist vorgesehen, dass das Formschlusselement der Trägerplatte als Ausnehmung und das Formschlusselement am Gleiterträger als ein in diese formschlüssig eingreifender, beispielsweise durch eine Abkantung erzeugter Steg beziehungsweise als ein Paar solcher Stege ausgebildet ist.

Gemäß einer zweiten Ausführungsform ist vorgesehen, dass das Formschlusselement der Trägerplatte als Steg beziehungsweise als ein Paar solcher Stege und das Formschlusselement am Gleiterträger als diese formschlüssig umgebende Ausnehmung(en) ausgebildet ist/sind.

Vorteilhaft weist das Einlegeteil Löcher auf, die zur besseren Verbindung mit dem Kunststoffmaterial der Trägerplatte von diesem beim Einschäumen ausgefüllt werden.

Gemäß einer weiteren vorteilhaften Ausgestaltung ist vorgesehen, dass die Trägerplatte im Bereich der Einlegeteile eine ihre Dicke reduzierende Aussparung aufweist, die zur formschlüssigen Aufnahme von Führungsflächen des Gleiterträgers dient. Dadurch wird das Positionieren des Gleiterträgers bei der Montage zusätzlich erleichtert und die Gleiterträger vergrößern durch ihre Einbettung in die Aussparungen auch nicht zusätzlich die Höhe des Schiebehimmels.

Die Einlegeteile und der Gleiterkräger weisen bevorzugt Bohrungen auf, die bei formschlüssigem Eingriff der Formschlusselemente deckungsgleich übereinander liegen und zur vertikalen Befestigung beider Teile mittels einer Schraube dienen. Durch die formschlüssige Verdrehsicherung mittels der Formschlusselemente genügt eine einzige Schraube zur Befestigung eines Gleiterträgers.

Am Gleiterträger ist in einem nach außen vorspringenden Bereich bevorzugt eine Gleiterhalterung für einen aufgesteckten Gleitschuh ausgebildet. An dieser Gleiterhalterung ist durch eine Einprägung bevorzugt eine Aufwölbung gebildet, die zur Halterung des aufgesteckten Gleitschuhs mit einem elastisch die Aufwölbung übergreifenden Teil in Y-Richtung dient.

Schließlich sind am Gleiterträger in einem nach außen vorspringenden Bereich bevorzugt eine Aussparung und ein Mitnehmer für einen Kabelschuh eines Antriebskabels des Schiebehimmelantriebs ausgebildet.

Nachfolgend wird das Fahrzeugdach anhand eines Ausführungsbeispiels unter Bezugnahme auf die Zeichnung näher erläutert. Es zeigt:
- Fig. 1: eine schematische perspektivische Draufsicht auf ein Fahrzeugdach mit einem bewegbaren Dachteil in geschlossener Position;
- Fig. 2: einen schematischen Längsschnitt durch das Fahrzeugdach gemäß Fi- gur 1 in ausgestellter Lüfterposition;
- Fig. 3: eine Teil-Draufsicht auf den linken vorderen Eckbereich des Schiebe- himmels mit montiertem Gleiterträger;
- Fig. 4: die Teil-Draufsicht gemäß Fig. 3 mit dem eingeschäumten Einlegeteil ohne montierten Gleiterträger;
- Fig. 5: das Einlegeteil und den Gleiterträger in unmontiertem Zustand in umge- kehrter Lage zur Verdeutlichung einer ersten Variante der Formschluss- elemente;
- Fig. 6: das Einlegeteil und den Gleiterträger in unmontiertem Zustand in Gebrauchslage zur weiteren Verdeutlichung der ersten Variante der Formschlusselemente;
- Fig. 7: einen Gleiterträger in einer zweiten Variante seiner Formschlusselemen- te; und
- Fig. 8: ein Einlegeteil in einer zweiten zum Gleiterträger gemäß Fig. 7 passen- den Variante seiner Formschlusselemente.

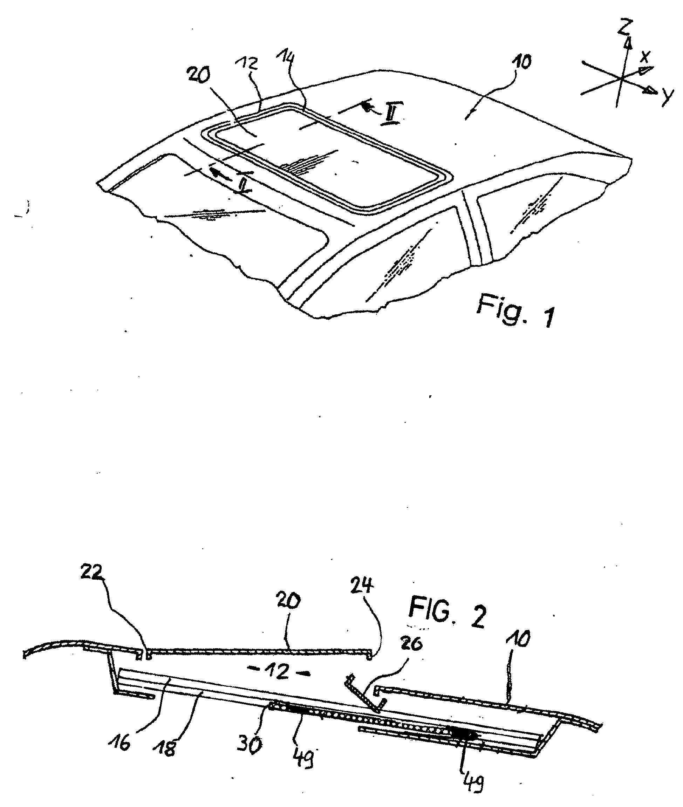

Das in Fig. 1 gezeigte Fahrzeugdach 10 weist ein bewegbares Dachteil 20 auf, das zum Verschließen oder wenigstens teilweisen Freigeben einer Dachöffnung 12 im festen Fahrzeugdach 10 dient. Die Dachöffnung 12 ist an ihrer Unterseite von einem mit dem festen Fahrzeugdach 10 verbundenen Dachrahmen 14 umgeben. Das bewegbare Dachteil 20 ist an seitlich der Dachöffnung 12 am Dachrahmen 14 angeordneten Führungsschienen 16 um eine nahe seiner Vorderkante 22 im Bereich eines nicht dargestellten vorderen Schlittens angeordnete Schwenkachse schwenkbar und dabei mit seiner Hinterkante 24 in eine Lüftungsstellung (siehe Figur 2) ausstellbar. Im gezeigten Beispiel ist das Dachteil 20 als Schiebehebedach ausgebildet und zusätzlich mit seiner Hinterkante 24 unter das feste Fahrzeugdach 10 absenkbar und zur vollständigen Freigabe der Dachöffnung 12 nach hinten unter das feste Fahrzeugdach 10 verschiebbar.

Der in der Lüfterposition gemäß Figur 2 zwischen der Hinterkante 24 des bewegbaren Dachteils 20 und der Hinterkante der Dachöffnung 12 gebildete Lüftungsspalt wird von einer Wasserrinne 26 untergegriffen, die in der Lüfterposition mit ihrer Vorderkante eine nach vorne oben gekippte Position einnimmt (siehe Fig. 2) und dadurch verhindert, dass beispielsweise beim Abbremsen des Fahrzeugs hinter der Dachöffnung 12 auf dem festen Fahrzeugdach 10 befindliches Wasser in den Fahrzeuginnenraum eindringt. Die Wasserrinne 16 untergreift die Hinterkante der Dachöffnung 12 auch bei geschlossenem Zustand des öffnungsfähigen Dachteils 20 gemäß Figur 1. In diesem Fall nimmt die Sohle der Wasserrinne 16 eine in etwa horizontale, zum öffnungsfähigen Dachteil 20 in etwa parallele Lage ein. Vor dem Verschieben des öffnungsfähigen Dachteils 20 unter das feste Fahrzeugdach 10 wird die Wasserrinne 16 mit der Hinterkante 24 des Dachteils 20 abgesenkt und mit diesem nach hinten verschoben.

Unterhalb des bewegbaren Dachteils 20, das typischerweise aus einem transparenten Material wie Glas oder Kunststoff besteht, ist an gesonderten Führungsbahnen 18 der Führungsschienen 16 ein Schiebehimmel 30 verschiebbar geführt, mittels dem die Fahrzeuginsassen den Lichteinfall beziehungsweise die Sonneneinstrahlung nach Wunsch regulieren können.

Der Schiebehimmel 30 ist zu beiden Seiten nahe seinem vorderen und seinem hinteren Ende mit jeweils einem Gleitschuh 49 versehen; die Gleitschuhe 49 sind in den Führungsbahnen 18 verschiebbar geführt. Die Gleitschuhe 49 sind an Gleiterhaltem 47 von Gleitschuhträgem 40 befestigt.

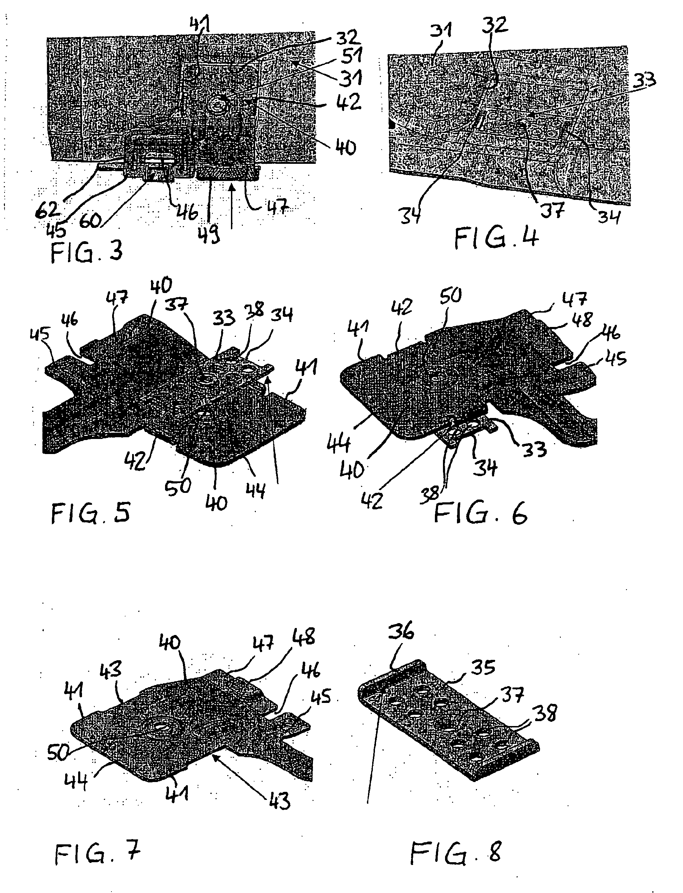

Gegenstand der vorliegenden Erfindung ist eine Vorrichtung für eine verbesserte Verbindung zwischen den Gleitschuhträgern 40 und dem Schiebehimmel 30. Diese wird nachfolgend in zwei Ausführungsformen anhand der Figuren 3 bis 8 beschrieben.

Der Schiebehimmel 30 besteht aus einer aus Kunststoff geschäumten Trägerplatte 31. Diese weist in den Bereichen, die für die Aufnahme der Gleitschuhträger 40 vorgesehen sind, jeweils eine rechteckige, in Y-Richtung nach außen offene Aussparung 32 mit einer verminderten Dicke der Trägerplatte 31 auf. Innerhalb dieser rechteckigen Aussparung 32 ist in das Material der Trägerplatte 31 ein Einlegeteil 33 mit eingeschäumt. Das Einlegeteil 33 weist ebenfalls eine rechteckige Form auf und erstreckt sich in Längsrichtung, gemäß dem in Fig. 1 angedeuteten Koordinatensystem in X-Richtung, d.h. parallel zur Führungsschiene 16 (siehe Figur 4). Für eine innigere Verbindung mit dem Kunststoffmaterial der Trägerplatte 31 ist im Einlegeteil 33 eine Vielzahl von Löchern 38 vorgesehen, welche beim Einschäumen in die Trägerplatte 31 vom Kunststoffmaterial derselben ausgefüllt werden. Das vorzugsweise aus Blech ausgebildete Einlegeteil 33 weist in der ersten Ausführungsform gemäß den Fign. 3 bis 6 am vorderen und am hinteren Ende jeweils eine Ausnehmung 34 auf. Diese Ausnehmung 34 wird beim umschäumen von Kunststoffmaterial freigehalten und dient als Formschlusselement für das zusammenfügen mit dem Gleiterträger 40.

Der Gleiterträger 40 ist ebenfalls bevorzugt aus einem Blech durch Stanzen und Prägen hergestellt. Er weist in der Draufsicht eine winkelförmige Gestalt auf. Dabei erstreckt sich ein Schenkel des Winkels in die rechteckige Aussparung 32 an der Trägerplatte 31 hinein und liegt dort mit seitlichen Führungsflächen 41 und gegebenenfalls einer stirnseitigen Anschlagfläche 44 an. Der Gleiterträger 40 weist im Bereich der seitlichen Führungsflächen 41 zwei nach unten abgewinkelte Stege 42 auf, die beim Zusammenfügen mit dem Einlegeteil 33 exakt von oben her in deren Ausnehmungen 34 eingreifen und somit komplementäre Formschlusselemente zu diesen darstellen.

Der zweite Schenkel des Winkels des Gleiterträgers 40 erstreckt sich in Längsrichtung des Schlebehimmels 30, in Figur 3 nach vom. An ihm ist im vorderen Bereich nach außen vorspringend ein Mitnehmer 45 vorgesehen, an den sich nach hinten eine rechteckige Aussparung 46 anschließt. Mitnehmer 45 und Aussparung 46 dienen zur Aufnahme und zur Führung eines Kabelschuhs 60 eines Antriebskabels 62, das zur Betätigung des Schiebehimmels 30 mittels eines vorzugsweise elektrischen Antriebs dient. Am in Figur 3 hinteren Ende des Gleiterträgers 40 ist an dessen Außenseite ein Gleiterhalter 47 angeformt, auf den der Gleitschuh 49 aufgesteckt ist. Eine Einprägung im Bereich des Gleiterhalts 47, die an dessen Oberseite zu einer Aufwölbung 48 führt, dient als Formschlusselement zur Halterung des Gleitschuhs 49, der mit einem elastischen Teil über diese Aufwölbung 48 geschoben wird und dadurch unverlierbar am Gleiterhalter 47 gehalten wird. In der Mitte des ersten Schenkels des Gleiterträgers 40, vorzugsweise mittig zwischen den Stegen 42 ist eine Bohrung 50 vorgesehen, die bei oberhalb des Einlegeteils 33 angeordnetem Gleiterträger 40 und im Eingriff befindlichen Formschlussmitteln (Stege 42 greifen in Ausnehmungen 34) deckungsgleich zu einer Bohrung 37 im Einlegeteil 33 liegt. Mittels einer die Bohrungen 50 und 37 durchdringenden Schraube 51 wird der Gleiterträger 40 in vertikaler Richtung mit dem Einlegeteil 33 verbunden. Dabei kann die Bohrung 37 im Einlegeteil 33 entweder ein Gewinde für die Schraube 51 aufweisen oder es werden selbst schneidende Schrauben 51 verwendet.

Die zweite Ausführungsform gemäß den Fign. 7 und 8 unterscheidet sich von der ersten Ausführungsform gemäß den Fign. 3 bis 6 nur durch eine umgekehrte Anordnung der Formschlussmittel an Gleiterträger und Einlegeteil. Wie Figur 8 zeigt, weist das Einlegeteil 35 in diesem Beispiel anstelle der Ausnehmungen 34 an seinem vorderen und hinteren Ende nach oben abgewinkelte Stege 36 auf. Diese Stege 36 können durch Abkantungen am Blech des Einlegeteils 35 erzeugt sein und dienen als Formschlussmittel für den Eingriff in Ausnehmungen 43, welche in diesem Fall anstelle der Stege 42 des ersten Ausführungsbeispiels am Gleiterträger 40 angeordnet sind.

Durch die Erfindung wird eine einfache und stabile Verbindung zwischen dem Schiebehimmel 30 und dem Gleiterträger 40 geschaffen. Durch die Formschlussmittel 34, 36 und 42, 43 werden Kräfte in Längs- und Querrichtung übertragen, so dass eine einzige Schraube 51 zur Befestigung des Gleiterträgers 40 ausreicht. Das Einbetten der Einlegeteile 33 bzw. 35 erfolgt in einfacher Weise im Formwerkzeug der Trägerplatte 31. Ein Austausch der Trägerplatte 40 im Falle einer Beschädigung ist in einfacher Weise möglich. Die Einlegeteile 33 bzw. 35 aus Blech übertragen durch ihre Einbettung in das Kunststoffmaterial der Trägerplatte 31 optimal die durch die Gleitschuhe 49 oder durch den Kabelschuh 60 in den Gleiterträger 40 eingeleiteten Kräfte auf den Schiebehimmel 30.

### Bezugszeichenliste

- 10: Fahrzeugdach
- 12: Dachöffnung
- 14: Dachrahmen
- 16: Führungsschiene
- 18: Führungsbahn (für 49)
- 20: bewegbares Dachteil (Deckel)
- 22: Vorderkante (von 20)
- 24: Hinterkante (von 20)
- 26: Wasserrinne
- 30: Schiebehimmel
- 31: Trägerplatte (von 30)
- 32: Aussparung (an 31)
- 33: Einlegeteil (1. Variante)
- 34: Ausnehmung (an 33)
- 35: Einlegeteil (2, Variante)
- 36: Steg (an 35)
- 37: Bohrung (in 33, 35)
- 38: Löcher (in 33, 35)
- 40: Gleiterträger
- 41: Führungsfläche (an 40)
- 42: Steg (an 40)
- 43: Ausnehmung (an 40)
- 44: Anschlagfläche (an 40)
- 45: Mitnehmer (für 60)
- 46: Aussparung (für 60)
- 47: Gleiterhalter
- 48: Aufwölbung
- 49: Gleitschuh
- 50: Bohrung (in 40)
- 51: Schraube
- 60: Kabelschuh
- 62: Antriebskabel

## Patentansprüche

1. Fahrzeugdach (10) mit einem unterhalb eines bewegbaren Dachteils (20) angeordneten Schiebehimmel (30), der von einer Trägerplatte (31) gebildet wird, an der Befestigungselemente für Gleitelemente (49) angeordnet sind, wobei die Gleitelemente (49) an einem Gleiterträger (40) befestigt sind, wobei die Trägerplatte (31) aus einem geschäumten Kunststoffmaterial besteht und als Befestigungselement ein Einlegeteil (33) in das Kunststoffmaterial der Trägerplatte (31) eingebettet ist, **dadurch gekennzeichnet, dass** der Gleiterträger (40) mit den Befestigungselementen zumindest an zwei Seiten in einem formschlüssigen Eingriff steht und das Einlegeteil (33) Formschlusselemente (34) zur Aufnahme komplementär geformter Formschlusselemente (42) am Gleiterträger (40) aufweist, und dass die Formschlusselemente des Einlegeteils (33) als Ausnehmungen (34) und die Formschlusselemente am Gleiterträger (40) als in diese formschlüssig eingreifende Stege (42) ausgebildet sind.

2. Fahrzeugdach (10) mit einem unterhalb eines bewegbaren Dachteils (20) angeordneten Schiebehimmel (30), der von einer Trägerplatte (31) gebildet wird, an der Befestigungselemente für Gleitelemente (49) angeordnet sind, wobei die Gleitelemente (49) an einem Gleiterträger (40) befestigt sind, wobei die Trägerplatte (31) aus einem geschäumten Kunststoffmaterial besteht und als Befestigungselement ein Einlegeteil (35) in das Kunststoffmaterial der Trägerplatte (31) eingebettet ist, **dadurch gekennzeichnet, dass** der Gleiterträger (40) mit den Befestigungselementen zumindest an zwei Seiten in einem formschlüssigen Eingriff steht und das Einlegeteil (35) Formschlusselemente (36) zur Aufnahme komplementär geformter Formschlusselemente (43) am Gleiterträger (40) aufweist, und dass die Formschlusselemente des Einlegeteils (35) als Stege (36) und die Formschlusselemente am Gleiterträger (40) als diese formschlüssig umgebende Ausnehmungen (43) ausgebildet sind.

3. Fahrzeugdach nach einem der vorhergehenden Ansprüche, **dadurch gekennzeichnet, dass** das Einlegeteil (33, 35) Löcher (38) aufweist, die zur besseren Verbindung mit dem Kunststoffmaterial der Trägerplatte (31) von diesem ausgefüllt werden.

4. Fahrzeugdach nach einem der vorhergehenden Ansprüche, **dadurch gekennzeichnet, dass** die Trägerplatte (31) im Bereich der Einlegeteile (33,35) eine ihre Dicke reduzierende Aussparung (32) aufweist, die zur formschlüssigen Aufnahme des Gleiterträgers (40) dient.

5. Fahrzeugdach nach einem der vorhergehenden Ansprüche, **dadurch gekennzeichnet, dass** die Einlegeteile (33, 35) und der Gleiterträger (40) Bohrungen (37 bzw. 50) aufweisen, die bei formschlüssigem Eingriff der Formschlusselemente (34, 36; 42, 43) deckungsgleich übereinander liegen und zur vertikalen Befestigung beider Teile mittels einer Schraube (51) dienen.

6. Fahrzeugdach nach einem der vorhergehenden Ansprüche, **dadurch gekennzeichnet, dass** am Gleiterträger (40) in einem nach außen vorspringenden Bereich ein Gleiterhalter (47) für einen aufgesteckten Gleitschuh (49) ausgebildet ist.

7. Fahrzeugdach nach Anspruch 7, **dadurch gekennzeichnet, dass** am Gleiterhalter (47) durch eine Einprägung eine Aufwölbung (48) gebildet ist, die zur Halterung des aufgesteckten Gleitschuhs (49) in Y-Richtung dient.

8. Fahrzeugdach nach einem der vorhergehenden Ansprüche, **dadurch gekennzeichnet, dass** am Gleiterträger (40) in einem nach außen vorspringenden Bereich eine Aussparung (46) und ein Mitnehmer (47) für einen Kabelschuh (60) eines Antriebskabel (62) ausgebildet sind.

## Claims

1. Vehicle roof (10) with a sliding roof lining (30) which is arranged below a movable roof part (20) and is formed by a support panel (31) on which fastening elements for sliding elements (49) are arranged, wherein the sliding elements (49) are fastened to a slider carrier (40), wherein the carrier panel (31) is composed of a foamed plastics material, and an insert part (33) is embedded into the plastics material of the carrier panel (31) as a fastening element, **characterized in that** the slider carrier (40) is in form-fitting engagement with the fastening elements at least on two sides, and the insert part (33) has form-fitting elements (34) for receiving form-fitting elements (42) of complementary shape on the slider carrier (40), and **in that** the form-fitting elements of the insert part (33) are designed as recesses (34) and the form-fitting elements on the slider carrier (40) are designed as webs (42) engaging in a form-fitting manner in said recesses.

2. Vehicle roof (10) with a sliding roof lining (30) which is arranged below a movable roof part (20) and is formed by a support panel (31) on which fastening elements for sliding elements (49) are arranged, wherein the sliding elements (49) are fastened to a slider carrier (40), wherein the carrier panel (31) is composed of a foamed plastics material, and an insert part (35) is embedded into the plastics material of the carrier panel (31) as a fastening element, **characterized in that** the slider carrier (40) is in form-fitting engagement with the fastening elements at least on two sides, and the insert part (35) has form-fitting elements (36) for receiving form-fitting elements (43) of complementary shape on the slider carrier (40), and **in that** the form-fitting elements of the insert part (35) are designed as webs (36) and the form-fitting elements on the slider carrier (40) are designed as recesses (43) surrounding said webs in a form-fitting manner.

3. Vehicle roof according to one of the preceding claims, **characterized in that** the insert part (33, 35) has holes (38) which are filled by the plastics material of the carrier panel (31) for better connection thereto.

4. Vehicle roof according to one of the preceding claims, **characterized in that** the carrier panel (31) has, in the region of the insert parts (33, 35), a cutout (32) which reduces the thickness of said carrier panel and serves to receive the slider carrier (40) in a form-fitting manner.

5. Vehicle roof according to one of the preceding claims, **characterized in that** the insert parts (33, 35) and the slider carrier (40) have respective bores (37 and 50) which, when the form-fitting elements (34, 36; 42, 43) are in engagement in a form-fitting manner, lie congruently one above the other and serve for the vertical fastening of the two parts by means of a screw (51).

6. Vehicle roof according to one of the preceding claims, **characterized in that** a slider holder (47) for a pushed-on sliding block (49) is formed in an outwardly projecting region on the slider carrier (40).

7. Vehicle roof according to Claim 6, **characterized in that** an arched portion (48) is formed on the slider holder (47) by means of an impression, the arched portion serving to secure the pushed-on sliding block (49) in the Y direction.

8. Vehicle roof according to one of the preceding claims, **characterized in that** a cutout (46) and a driver (47) for a cable lug (60) of a driving cable (62) are formed in an outwardly projecting region on the slider carrier (40).

## Revendications

1. Toit de véhicule (10) comprenant un store coulissant (30) disposé sous une partie de toit mobile (20), qui est formé par une plaque de support (31) sur laquelle sont disposés des éléments de fixation pour des éléments coulissants (49), les éléments coulissants (49) étant fixés sur un support de coulisse (40), la plaque de support (31) se composant d'une matière plastique moussée et une pièce d'insert (33) servant d'élément de fixation étant noyée dans la matière plastique de la plaque de support (31), **caractérisé en ce que** le support de coulisse (40) est en prise par engagement positif avec les éléments de fixation au moins au niveau de deux côtés, et la pièce d'insert (33) présente des éléments d'engagement positif (34) pour recevoir des éléments d'engagement positif de forme complémentaire (42) sur le support de coulisse (40), et **en ce que** les éléments d'engagement positif de la pièce d'insert (33) sont réalisés sous forme de logements (34) et les éléments d'engagement positif sur le support de coulisse (40) sont réalisés sous forme de nervures (42) s'engageant par engagement positif dans ceux-ci.

2. Toit de véhicule (10) comprenant un store coulissant (30) disposé sous une partie de toit mobile (20), qui est formé par une plaque de support (31) sur laquelle sont disposés des éléments de fixation pour des éléments coulissants (49), les éléments coulissants (49) étant fixés sur un support de coulisse (40), la plaque de support (31) se composant d'une matière plastique moussée et une pièce d'insert (35) servant d'élément de fixation étant noyée dans la matière plastique de la plaque de support (31), **caractérisé en ce que** le support de coulisse (40) est en prise par engagement positif avec les éléments de fixation au moins au niveau de deux côtés, et la pièce d'insert (35) présente des éléments d'engagement positif (36) pour recevoir des éléments d'engagement positif de forme complémentaire (43) sur le support de coulisse (40), et **en ce que** les éléments d'engagement positif de la pièce d'insert (35) sont réalisés sous forme de nervures (36) et les éléments d'engagement positif sur le support de coulisse (40) sont réalisés sous forme de logements (43) entourant celles-ci par engagement positif.

3. Toit de véhicule selon l'une quelconque des revendications précédentes, **caractérisé en ce que** la pièce d'insert (33, 35) présente des trous (38) qui sont remplis de la matière plastique de la plaque de support (31) afin d'améliorer la connexion à cette matière.

4. Toit de véhicule selon l'une quelconque des revendications précédentes, **caractérisé en ce que** la plaque de support (31) présente dans la région des pièces d'insert (33, 35) un évidement (32) réduisant son épaisseur, qui sert à recevoir le support de coulisse (40) par engagement positif.

5. Toit de véhicule selon l'une quelconque des revendications précédentes, **caractérisé en ce que** les pièces d'insert (33, 35) et le support de coulisse (40) présentent des alésages (37 ou 50), qui, dans le cas d'un engagement positif des éléments d'engagement positif (34, 36 ; 42, 43), sont disposés l'un au-dessus de l'autre en coïncidence, et servent à la fixation verticale des deux pièces au moyen d'une vis (51).

6. Toit de véhicule selon l'une quelconque des revendications précédentes, **caractérisé en ce qu'**un dispositif de retenue de coulisse (47) pour un sabot coulissant enfiché (49) est réalisé sur le support de coulisse (40) dans une région saillant vers l'extérieur.

7. Toit de véhicule selon la revendication 6, **caractérisé en ce qu'**un bombement (48) qui est formé sur le dispositif de retenue de coulisse (47) par un enfoncement sert à retenir le sabot coulissant enfiché (49) dans la direction Y.

8. Toit de véhicule selon l'une quelconque des revendications précédentes, **caractérisé en ce qu'**un évidement (46) et un dispositif d'entraînement (47) pour une cosse de câble (60) d'un câble d'entraînement (62) sont réalisés sur le support de coulisse (40) dans une région saillant vers l'extérieur.
